# EUROPÄISCHE PATENTSCHRIFT

(11) **EP 3 064 345 B1**
(45) Veröffentlichungstag und Bekanntmachung des Hinweises auf die Patenterteilung: **06.05.2020**
(21) Anmeldenummer: 16151168.8
(22) Anmeldetag: 14.01.2016
(51) Int. Cl.: B32B 5/00, B32B 5/02, B32B 7/00, B32B 7/12, B32B 25/00, B32B 25/04, B32B 25/14, B32B 25/20, B32B 27/00, B32B 27/06, B32B 27/08, B32B 27/26, B32B 1/00, B32B 1/08

(54) **SCHLAUCH, INSBESONDERE ZUM TRANSPORT EINES KÜHLMITTELS, SEINE VERWENDUNG UND VERFAHREN ZU DESSEN HERSTELLUNG**
HOSE TUBING, PARTICULARLY FOR THE TRANSPORT OF COOLANTS, ITS APPLICATION AND PROCESS FOR THE PRODUCTION THEREOF.
TUYAU, PARTICULIÈREMENT POUR LE TRANSPORT DE LIQUIDE DE REFROIDISSEMENT, SON APPLICATION ET PROCÉDÉ POUR SA PRODUCTION.

(30) Priorität: 04.03.2015 DE 102015203877
(43) Veröffentlichungstag der Anmeldung: 07.09.2016
(73) Patentinhaber: ContiTech MGW GmbH, 34346 Hannoversch-Münden (DE)
(72) Erfinder: Bäuerle-Müller, Christel, 34346 Hedemünden (DE); Sont, Michael, 21640 Horneburg (DE); Seibold, Sebastian, 34346 Hannoversch Münden (DE)
(74) Vertreter: Preusser, Andrea

(56) Entgegenhaltungen:
- DE-A1-102009 026 254
- DE-A1-102011 002 256
- DE-A1-102011 055 752

## Beschreibung

Die Erfindung betrifft einen Schlauch und Verfahren zur Herstellung davon und ist in den Ansprüchen definiert.

Die Erfindung betrifft einen Schlauch, der insbesondere ein Kühlmittel transportiert und wenigstens folgenden Schichtenaufbau aufweist:
- eine Innenschicht aus einer vernetzten Kautschukmischung, die insbesondere als medienbeständige Innenschicht mit Kontakt zum Kühlmittel wirkt; und
- eine Außenschicht aus einer vernetzten Kautschukmischung, die auf der Außenseite gegenüber den äußeren Einflüssen im Einsatzbereich beständig ist, wobei die Innenschicht und die Außenschicht einen Haftverbund bilden.

Aus WO 2012/146441A1 sind bereits gattungsähnliche Kühlwasserschläuche bekannt. Die dort aufgeführten Schläuche besitzen eine Innenschicht aus EPDM und eine Außenschicht aus ACM oder AEM. Sie zeichnen sich zwar durch eine ausreichend gute Stabilität gegenüber dem Kühlmittel aus, allerdings beträgt der Außen-Temperatur-Einsatzbereich nur maximal 180°C.

Bedingt durch die immer leistungsstärkeren Fahrzeuge entstehen im Motorraum auch immer höhere thermische Anforderungen an die Heiz- und Kühlkreisläufe, a.u. durch Wärmerückgewinnung (bspw. von Abgasen), Heizung und Kühlung von SCR-Einspritzeinheiten, Turboladerkühlung, etc. Somit müssen Heiz- und Kühlkreisläufe mittlerweile Service-Temperaturen von 200°C und höher standhalten können, ohne die gute Medienbeständigkeit zu verlieren. Dies gilt insbesondere bei Kühlwasserschläuchen gegenüber den modernen Kühlmitteln, die zunehmend immer mehr Bestandteile aufweisen, die eine Verschlammung der Leitungen und Pumpen verhindern sollen.

Die Aufgabe der Erfindung besteht somit darin, einen gattungsgemäßen Schlauch bereitzustellen, der sich einerseits durch eine gegenüber dem Kühlmittel medienbeständige Innenschicht und andererseits durch eine gegenüber Temperaturen bis 200°C und ggf. höher beständige Außenschicht auszeichnet.

Gelöst wird diese Aufgabe dadurch, dass die vernetzte Kautschukmischung der Innenschicht wenigstens einen EPDM-Kautschuk und / oder wenigstens einen EPM-Kautschuk enthält und die vernetzte Kautschukmischung der Außenschicht wenigstens einen Silikonkautschuk enthält.

Erfindungsgemäß enthält die Innenschicht wenigstens einen EPDM-Kautschuk und / oder wenigstens einen EPM-Kautschuk. Dies gewährleistet die gute Medienbeständigkeit, insbesondere gegen die modernen Kühlmittel.
Die vernetzte Kautschukmischung der Außenschicht enthält erfindungsgemäß wenigstens einen Silikonkautschuk. Der Silikonkautschuk gewährleistet, dass der Schlauch auch bei Temperaturen bis 200°C und höher, bevorzugt bis 220°C, verwendet werden kann.
Als Silikonkautschuke können alle der fachkundigen Person bekannten Silikonkautschuke, wie bspw. MQ (Methyl-Silikonkautschuk), MFQ (MQ mit Fluor-Gruppen), MPQ (MQ mit Phenyl-Gruppen), MVQ (MQ mit Vinyl-Gruppen), MPVQ (MQ mit Phenyl- und Vinyl-Gruppen) verwendet werden. Die Einteilung der Silikonkautschuke erfolgt gemäß DIN ISO 1629: 1992-03. Die genannten Kautschuke der Innenschicht und der Außenschicht können alleine oder in Kombination mit wenigstens einem weiteren Kautschuk verwendet werden.

In einer Ausführungsform kann der Schlauch nur aus einer Innenschicht und einer Außenschicht bestehen.

In einer besonders bevorzugten Ausführungsform kann zusätzlich wenigstens eine weitere Schicht aufgebaut aus wenigstens einem textilen Flächengebilde als Festigkeitsträgerschicht oder aufgebaut aus wenigstens einer Kautschukmischung enthalten sein.

Die Festigkeitsträgerschicht kann ein- oder mehrlagig ausgebildet sein. Auf diese Weise kann das zu transportierende Medium unter Druck stehen. Das textile Flächengebilde der Festigkeitsträgerschicht kann ein Gewebe, Gewirk oder Gestrick sein. Die diesbezüglichen Werkstoffe können ein Polyamid (PA), Polyimid (PI), ein Aramid, insbesondere para-Aramid oder meta-Aramid, ein Polyvinylacetal (PVA), ein Polyetheretherketon (PEEK), ein Polyester, insbesondere Polyethylentherephthalat (PET) oder Polyethylen-2,6-naphthalat (PEN), ein Polysulfon (PSU), ein Polyoxadiazol (POD), ein Polyphenylen oder Polyphenylenderivat, insbesondere ein Polyphenylensulfid (PPS), sein. Auch Hybridkonzepte, beispielsweise in Form eines Mischzwirns, können zum Einsatz gelangen. Durch die geeignete Wahl des Werkstoffes für die Festigkeitsträgerschicht lässt sich ein guter Haftverbund zwischen der Innen- und der Außenschicht erzielen. Besonders geeignet hierfür sind: Aramid (p-Aramid und m-Aramid), oder POD.

Handelt es sich bei der weiteren Schicht um wenigstens eine Kautschukmischung, so enthält diese Kautschukmischung bevorzugt wenigstens einen EPDM-Kautschuk und / oder wenigstens einen EPM-Kautschuk oder wenigstens einen Silikonkautschuk. Besonders bevorzugt ist, es, wenn diese weitere Schicht einen Verschnitt, d.h. einen so genannten Blend, aus EPDM und / oder EPM und Silikonkautschuk enthält. Hierdurch lässt sich ein besonders guter Haftverbund zwischen der Innen- und der Außenschicht erzielen. Zusätzlich kann hierbei zur Erhöhung der Druckbeständigkeit wenigstens eine weitere Festigkeitsträgerschicht vorhanden sein.

Ein guter Haftverbund kann ebenso durch Oberflächenbehandlung der Innen- und / oder Außenschicht erzielt werden. Die Oberflächenbehandlung kann mittels Plasmaverfahren, Chemical Vapor Deposition (CVD), Ätzung, etc. erzielt werden.
Auch die Verwendung von Silanen und / oder Kieselsäuren als Haftvermittler, welche direkte Bestandteile der Kautschukmischung der Innenschicht und / oder Außenschicht bilden, ist denkbar. Ebenso können weitere gängige Haftvermittler alleine aufgetragen oder vorab in die Innenschicht und / oder Außenschicht eingemischt werden. Des Weiteren können weitere Kautschuklösungen, d.h. Kautschuke aufgelöst in geeigneten Lösungsmitteln, als Haftvermittler verwendet werden.

Die genannten Möglichkeiten zur Ausbildung des Haftverbundes können jeweils alleine oder in Kombination verwendet werden.

Im Rahmend es Herstellverfahrens des erfindungsgemäßen Schlauches wird der Haftvermittler nach der Herstellung von Innen- und Außenschicht auf wenigstens eine der beiden Schichten aufgetragen und erst anschließend wird der Schlauch vulkanisiert. Ebenso wird bei der Oberflächenmodifizierung nach der Herstellung von Innen- und Außenschicht wenigstens eine der beiden Schichten modifiziert und erst anschließend wird der Schlauch vulkanisiert.

Neben der Kautschukkomponente enthalten die Kautschukmischungen der Innen- und der Außenschicht in der Regel noch die üblichen Mischungsingredienzien. Von besonderer Bedeutung ist dabei das Vernetzersystem, gebildet aus einem Vernetzungsmittel und einem Coagenz oder Beschleuniger. Die weiteren Mischungsingredienzien umfassen einen Füllstoff und/oder ein Metalloxid und/oder einen Weichmacher und/oder ein Verarbeitungshilfsmittel und/oder ein Alterungsschutzmittel und/oder ein Haftmittel. Darüber hinaus können weitere Zusatzsstoffe der Kautschukmischung beigegeben werden, beispielsweise Kurzfasern, Füllstoffmehle, Recyclate, Silane, Farbstoffe, Wachse, Stabilisatoren, Gleithilfen, Verzögerer.

Die Erfindung wird nun anhand von Vergleichs- und Ausführungsbeispielen, die in den
Tabellen 1a und 1b zusammengefasst sind, und unter Bezugnahme auf eine schematische Zeichnung näher erläutert.
In den Tabellen 1a und 1b basieren die mit "E" gekennzeichneten Mischungen hierbei auf einem erfindungsgemäßen Schlauch, während es sich bei den mit "V" gekennzeichneten Mischungen um Vergleichsmischungen handelt.
Mit "A" werden die Außenschichten, mit "Z" die Zwischenschichten und mit "I" die Innenschichten bezeichnet. Als Festigkeitsträgerschichten von "V" und "E" können p-Aramid, m-Aramid oder POD verwendet werden.

In Tabelle 1 a sind dabei die Mischungszusammensetzungen dargestellt, während in der Tabelle 1b die dazugehörigen entsprechenden physikalischen Eigenschaften der Gesamtschläuche illustriert sind.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Der Aufbau der Gesamtschläuche in Tabelle 1b ist hierbei wie folgt:
VA1: Außenschicht Vergleichs schlauch Festigkeitsträgerschicht
VZ2: Zwischenschicht Vergleichsschlauch
VI3: Innenschicht Vergleichs schlauch
EA1: Außenschicht erfindungsgemäßer Schlauch Festigkeitsträgerschicht
EZ2: Zwischenschicht erfindungsgemäßer Schlauch
EI3: Innenschicht erfindungsgemäßer Schlauch

**Tabelle 1a**

| **Bestandteile** | **Einheit** | **VA1** | **VZ2** | **VI3** | **EA1** | **EZ2** | **EI3** |
|---|---|---|---|---|---|---|---|
| EPDM^{a} | phr | 0 | 0 | 100 | 0 | 38 | 85 |
| AEM^{b} | phr | 100 | 100 | 0 | 0 | 0 | 0 |
| VMQ^{d} | phr | 0 | 0 | 0 | 100 | 62 | 16 |
| Ruß | phr | 60 | 65 | 80 | 0 | 23 | 51 |
| Helle Füllstoffe | phr | 0 | 0 | 0 | 0 | 29 | 64 |
| Kieselsäure | phr | 0 | 0 | 0 | 65 | 41 | 10 |
| Weichmacher | phr | 3 | 10 | 40 | 0 | 11 | 25 |
| Verarbeitungshilfe ^{c} | phr | 3,2 | 4,2 | 1,5 | 0 | 1 | 3 |
| Alterungsschutzmittel | phr | 3,3 | 2 | 5 | 0 | 0,3 | 0,7 |
| Haftvemittler | phr | 0 | 8 | 5 | 0 | 0 | 0 |
| Aktivatoren | Phr | 0 | 0 | 0 | 0 | 1 | 1,5 |
| DBU-Beschleuniger | phr | 2 | 1,4 | 0 | 0 | 0 | 0 |
| HMDC-Vernetzer | phr | 1 | 0,9 | 0 | 0 | 0,3 | 0,7 |
| Coagenz | phr | 0 | 0 | 1 | 0 | 0 | 0 |
| Organ. Peroxide 45% | phr | 0 | 0 | 8 | 2 | 4 | 6 |
| Farbe | phr | 0 | 0 | 0 | 1,5 | 1 | 0,2 |
| Hitzestabilisatoren | phr | 0 | 0 | 0 | 1,5 | 0,9 | 0,2 |

| | | | | | | | |
|---|---|---|---|---|---|---|---|
| ^{a} Keltan®, Fa. Lanxess ^{b} VAMAC®, Fa. DuPont ^{d} Elastosil®, Fa. Wacker ^{c} (Carnaubawachs, Pentaerithrittetrastearat) | | | | | | | |

**Tabelle 1b**

| **Bestandteile** | **Einheit** | **V RT** | **V 94h 210°C** | **E RT** | **E 94h 220°C** |
|---|---|---|---|---|---|
| Dichte DIN EN ISO 1183-1 | g/cm³ | 1,23 | - | 1,22 | - |
| Härte DIN ISO 7619-1 | Shore A | 54 | 72 | 71 | 73 |
| Zugfestigkeit DIN 53504 S3A | N/mm² | 15,8 | 4,6 | 9,7 | 8,0 |
| Bruchdehnung DIN 53504 S3A | % | 498 | 26 | 440 | 380 |
| Weiterreißwiderstand DIN ISO 34-1A | N/mm | 14,6 | - | 10,5 | - |

Aus der Tabelle 1b ist zu erkennen, dass die AEM-Außenschicht des Vergleichsschlauches V nach Alterung 94 h bei 210 °C nur noch 26 % Rest-Bruchdehnung aufweist, also zerstört ist. Der erfindungsgemäße Schlauch E hat hingegen bei 220°C nur einen minimalen Abfall.

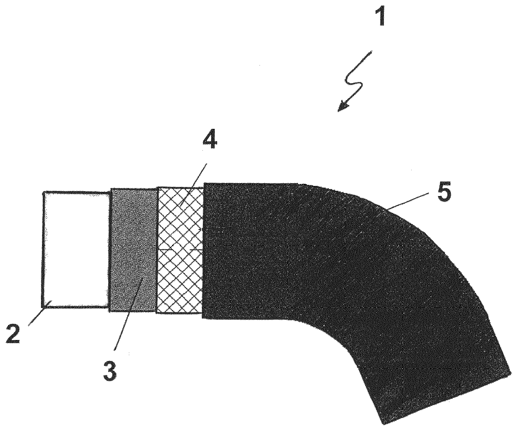

Die einzige Figur zeigt einen Schlauch 1 als Kühlwasserkrümmerschlauch. Der Schlauch weist dabei folgenden Schichtenaufbau mit folgender beispielhafter Werkstoffkonzeption auf:
- Erste Schicht 2:: vernetzte und verschnittfreie EPDM-Kautschukmischung als Innenschicht
- Zweite Schicht 3:: vernetzte und verschnittfreie Silikonkautschukmischung als weitere Schicht
- Dritte Schicht 4:: Gestrick aus Aramid als Festigkeitsträgerschicht
- Vierte Schicht 5: vernetzte und verschnittfreie Silikonkautschukmischung als Außenschicht

Alle vier Schichten bilden im Zuge der Vulkanisation einen festen Haftverbund.

Alternativ kommen auch folgende Schichtaufbauten in Frage:
- Erste Schicht:: vernetzte und verschnittfreie EPDM-Kautschukmischung als Innenschicht
- Zweite Schicht:: Gestrick aus Aramid als Festigkeitsträgerschicht
- Dritte Schicht:: vernetzte und verschnittfreie EPDM-Kautschukmischung als weitere Schicht
- Vierte Schicht:: vernetzte und verschnittfreie Silikonkautschukmischung als Außenschicht
- Erste Schicht:: vernetzte und verschnittfreie EPDM-Kautschukmischung als Innenschicht
- Zweite Schicht:: Gestrick aus Aramid als Festigkeitsträgerschicht
- Dritte Schicht:: vernetzte und verschnittfreie Silikonkautschukmischung als Außenschicht

### Bezugszeichenliste

### (Teil der Beschreibung)

- 1: Schlauch
- 2: Erste Schicht (Innenschicht)
- 3: Zweite Schicht (Zwischenschicht)
- 4: Dritte Schicht (Festigkeitsträgerschicht)
- 5: Vierte Schicht (Außenschicht)

## Patentansprüche

1. Schlauch (1), der insbesondere ein Kühlmittel transportiert und wenigstens folgenden Schichtenaufbau aufweist:
- eine Innenschicht (2) aus einer vernetzten Kautschukmischung, die insbesondere als medienbeständige Innenschicht mit Kontakt zum Kühlmittel wirkt; und
- eine Außenschicht (3) aus einer vernetzten Kautschukmischung, die auf der Außenseite gegenüber den äußeren Einflüssen im Einsatzbereich beständig ist, wobei die Innenschicht (2) und die Außenschicht (3) einen Haftverbund bilden,
**dadurch gekennzeichnet, dass**
- die vernetzte Kautschukmischung der Innenschicht (2) wenigstens einen EPDM-Kautschuk und / oder wenigstens einen EPM-Kautschuk enthält und
- die vernetzte Kautschukmischung der Außenschicht (3) wenigstens einen Silikonkautschuk enthält.

2. Schlauch nach Anspruch 1, **dadurch gekennzeichnet, dass** der Schlauch (1) zusätzlich wenigstens eine weitere Schicht (4) aufgebaut aus wenigstens einem textilen Flächengebilde als Festigkeitsträgerschicht enthält.

3. Schlauch nach Anspruch 2, **dadurch gekennzeichnet, dass** das textile Flächengebilde ein Gewebe, Gewirk oder Gestrick ist.

4. Schlauch nach Anspruch 1, **dadurch gekennzeichnet, dass** der Schlauch (1) zusätzlich wenigstens eine weitere Schicht (4) aufgebaut aus wenigstens einer Kautschukmischung enthält.

5. Schlauch nach Anspruch 4, **dadurch gekennzeichnet, dass** die Kautschukmischung der weiteren Schicht (4) wenigstens einen EPDM-Kautschuk und / oder wenigstens einen EPM-Kautschuk und / oder wenigstens einen Silikonkautschuk enthält.

6. Verfahren zur Herstellung eines Schlauches nach Anspruch 1 bis 5, **dadurch gekennzeichnet, dass** wenigstens ein Haftvermittler auf die unvernetzte Innenschicht und / oder unvernetzte Außenschicht aufgetragen wird und anschließend die Innenschicht und die Außenschicht zu einem Haftverbund vulkanisiert werden.

7. Verfahren zur Herstellung eines Schlauches nach Anspruch 1 bis 5, **dadurch gekennzeichnet, dass** die unvernetzte Innenschicht und / oder die unvernetzte Außenschicht oberflächenmodifiziert werden und anschließend die Innenschicht und die Außenschicht zu einem Haftverbund vulkanisiert werden.

8. Schlauch nach einem der Ansprüche 1 bis 5 zur Verwendung einer Schlauchanordnung, umfassend den Schlauch (1) und wenigstens ein Zusatzbauteil, insbesondere in Kombination mit einem Hennstecker, einer VDA-Kupplung, einem Rohrstutzen mit Befestigungselementen, einem Scheuerschutz oder einem Schellenhalter.

## Claims

1. Hose (1) which, in particular, transports a coolant and has at least the following layer structure:
- an inner layer (2) composed of a crosslinked rubber mixture which acts, in particular, as a media-resistant inner layer in contact with the coolant; and
- an outer layer (3) composed of a crosslinked rubber mixture which, on the outside, is resistant to the external influences in the area of use,
wherein the inner layer (2) and the outer layer (3) form an adhesive bond,
**characterized in that**
- the crosslinked rubber mixture of the inner layer (2) contains at least one EPDM rubber and/or at least one EPM rubber, and
- the crosslinked rubber mixture of the outer layer (3) contains at least one silicone rubber.

2. Hose according to Claim 1, **characterized in that** the hose (1) additionally contains at least one further layer (4) constructed from at least one sheet-like textile structure as a reinforcement layer.

3. Hose according to Claim 2, **characterized in that** the sheet-like textile structure is a woven fabric or knitted fabric.

4. Hose according to Claim 1, **characterized in that** the hose (1) additionally contains at least one further layer (4) constructed from at least one rubber mixture.

5. Hose according to Claim 4, **characterized in that** the rubber mixture of the further layer (4) contains at least one EPDM rubber and/or at least one EPM rubber and/or at least one silicone rubber.

6. Method for producing a hose according to Claims 1 to 5, **characterized in that** at least one adhesion promoter is applied to the uncrosslinked inner layer and/or uncrosslinked outer layer and then the inner layer and the outer layer are vulcanized to form an adhesive bond.

7. Method for producing a hose according to Claims 1 to 5, **characterized in that** the uncrosslinked inner layer and/or the uncrosslinked outer layer are surface-modified and then the inner layer and the outer layer are vulcanized to form an adhesive bond.

8. Hose according to one of Claims 1 to 5 for using a hose arrangement comprising the hose (1) and at least one additional component, in particular in combination with a Henn connector, with a VDA coupling, with a pipe nozzle with securing elements, with abrasion protection, or with a hose clamp.

## Revendications

1. Tuyau (1), qui transporte en particulier un agent de refroidissement et qui a au moins la structure de couche suivante :
- une couche intérieure (2) formée d'un mélange de caoutchoucs réticulé qui agit notamment comme une couche intérieure résistante aux milieux en contact avec l'agent de refroidissement ; et
- une couche extérieure (3) formée d'un mélange de caoutchoucs réticulé qui est résistant du côté extérieur aux influences extérieures dans la zone d'utilisation, la couche intérieure (2) et la couche extérieure (3) formant un composite adhésif,
**caractérisé en ce que**
- le mélange de caoutchoucs réticulé de la couche intérieure (2) contient au moins un caoutchouc EPDM et/ou au moins un caoutchouc EPM et
- le mélange de caoutchoucs réticulé de la couche extérieure (3) contient au moins un caoutchouc silicone.

2. Tuyau selon la revendication 1, **caractérisé en ce que** le tuyau (1) contient en outre au moins une autre couche (4) réalisée à partir d'au moins un tissu textile comme couche de renfort.

3. Tuyau selon la revendication 2, **caractérisé en ce que** le tissu textile est un tissu tissé, maillé ou tricoté.

4. Tuyau selon la revendication 1, **caractérisé en ce que** le tuyau (1) contient en outre au moins une autre couche (4) réalisée à partir d'au moins un mélange de caoutchoucs.

5. Tuyau selon la revendication 4, **caractérisé en ce que** le mélange de caoutchoucs de l'autre couche (4) contient au moins un caoutchouc EPDM et/ou au moins un caoutchouc EPM et/ou au moins un caoutchouc silicone.

6. Procédé de fabrication d'un tuyau selon les revendications 1 à 5, **caractérisé en ce qu'**au moins un promoteur d'adhérence est appliqué sur la couche intérieure non réticulée et/ou la couche extérieure non réticulée puis la couche intérieure et la couche extérieure sont vulcanisées pour former un composite adhésif.

7. Procédé de fabrication d'un tuyau selon les revendications 1 à 5, **caractérisé en ce que** la couche intérieure non réticulée et/ou la couche extérieure non réticulée sont modifiées en surface puis la couche intérieure et la couche extérieure sont vulcanisées pour former un composite adhésif.

8. Tuyau selon l'une des revendications 1 à 5 destiné à l'utilisation d'un agencement de tuyau comprenant le tuyau (1) et au moins un composant supplémentaire, en particulier en combinaison avec un connecteur Henn, un raccord VDA, une douille de tuyau pourvue d'éléments de fixation, une protection anti-rayures ou un support à bride.
